# EUROPEAN PATENT SPECIFICATION

(11) **EP 1 604 843 B1**
(45) Date of publication and mention of the grant of the patent: **24.01.2007**
(21) Application number: 05104927.8
(22) Date of filing: 07.06.2005
(51) Int. Cl.: B60C 27/14

(54) **Lever-actuated clamping device for the attachment of an anti-skid system to the rim of a vehicle wheel**
Hebelbetätigbare Klemmvorrichtung zum Befestigen von einem Anti-Gleit Systeme an der Felge von einem Fahrzeugrad
Dispositif de serrage comprenant un levier actionné pour fixer un système antidérapant à la jante d'un véhicule

(30) Priority: 10.06.2004 IT MI20040276 U
(43) Date of publication of application: 14.12.2005
(73) Proprietor: MAGGI CATENE S.p.A., 23854 Olginate (LECCO) (IT)
(72) Inventor: Bouvier, Jean-Pierre, 1052 Le Mont sur Lausanne (CH); Maggi, Corrado, 23896 Sirtori (IT)
(74) Representative: Faggioni, Carlo Maria

(56) References cited:
- EP-A- 0 528 506
- EP-A- 1 291 201
- WO-A-20/04039611
- DE-U1- 8 623 171

## Description

The present invention relates to an improved attachment device for an anti-skid system for vehicle wheels, in particular for an anti-skid system of the type comprising support arms elastically attached to a wheel rim.

Some anti-skid systems of this type are known from EP 496.702 and CH 689.206.

A recent, particularly effective device according to the preamble of claim 1, is the one described in application WO 2004 039611 in the name of the same Applicant.

In these known devices, the system for joining the support arms to the wheel comprises a connection body encompassing said arms, a bush-shaped body, which can be tightened on a rim bolt, and an attachment assembly whereby the connection body is joined to the bush-like body.

In particular, for the tightening of the latter on the wheel bolt, the relative axial shift is exploited between a bush with conical surfaces (inner or outer ones, depending on circumstances) and a socket-shaped body, one of which being compressed and elastically deformed to clamp the periphery of the rim bolt.

In order to achieve this relative shift, use is made of a member with screw/nut coupling which, by means of a relative rotation of two components, achieves the desired axial shift with a suitable reduction ratio.

Fig. 1 shows an embodiment according to WO 2004 039611. As can be noticed, a bush-like body 1, with deformable conical tightening flaps 1a, slides within a socket 2, itself partly conical. The bush-like body 1 is meant to be tightened on a bolt B and is connected to a screw 3 which runs through the bottom of socket 2 and couples with a turnable knob 4: rotation of the latter in a fixed axial position, causes the translation of threaded stem 3 and consequently of body 1 with respect to socket 2. An attachment rod 5 is further coupled to a basis 2a of socket 2, at the end of which rod a U-shaped bracket 5a is mounted freely sliding, whereby the arm structure of the snow chain is attached (not shown). Rod 5 has the only function of transferring the point of attachment of the snow chain, from the position of bolt B, to the central rotation axis C of the vehicle wheel.

According to this construction, knob 4 is completely disengaged in rotation with respect to rod 5.

However, it has been found that with this arrangement the knob is not always suitable to perform a strong tightening action. As a matter of fact, the knob is very convenient for quick screwing on the threaded stem as long as there is no significant opposing force; but in the final tightening stage, when adequate torque must be provided, the limited diameter thereof does not offer suitable lever effect and hence manual effort is high.

An object of the present invention is to provide a snow chain with an improved attachment device, which allows effective and easy tightening of the device on the rim bolt, without the need to have access to separate tools or additional system components.

According to the invention, the object set forth above is achieved by an attachment device and relative snow chain as described in their essential features in the attached claims.

In particular, the device of the invention is in the form of an assembly to attach a snow chain to a bolt of a vehicle wheel, of the type comprising tightening-bush means and a centring rod whereon an attachment element slides, said bush means comprising a socket-like body wherein a bush for tightening on said bolt slides, the relative sliding between said bush and said socket-like body being accomplished by a screw/nut coupling between a first and a second tightening element, wherein one of said tightening elements is capable of being coupled in rotation with said centring rod.

Further features and advantages of the system according to the invention will in any case be more evident from the following detailed description, given by way of example and taken in conjunction with the accompanying drawings, wherein:

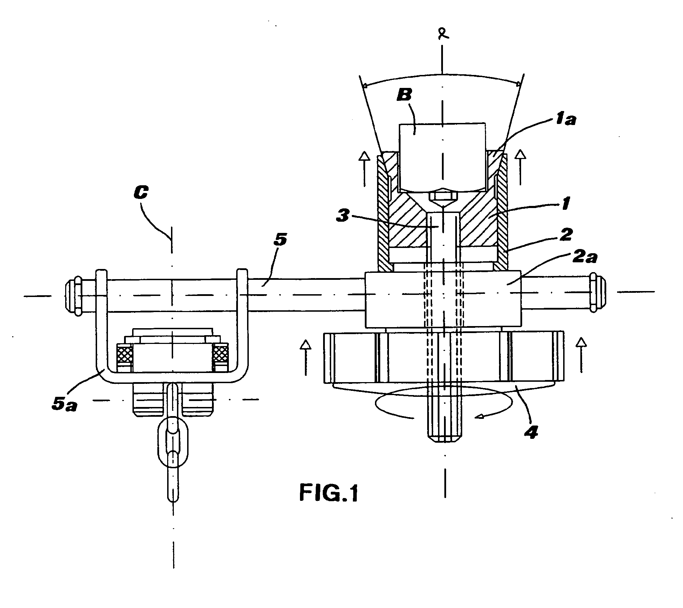

fig. 1, as already mentioned, is a partially-sectioned side elevation view, of an attachment assembly of the known art;
fig. 2 is a similar view to fig. 1 of an attachment assembly according to the invention;
fig. 3 is a top plan view of the device of fig. 2;
fig. 4 is a cross-section view taken along the line IV-IV of fig. 3; and
figs. 5A and 5B are two perspective views of another embodiment of the invention.

An assembly for attachment of a snow chain to a bolt consists, in a manner known per se, of a bush-like body 100, with a partially deformable conical mouth portion 101, slidingly mounted in a socket 102, itself possibly equipped with a conical inner surface.

The mutual engagement, to a greater or smaller degree, of bush 100 and socket 102, is capable of determining the tightening of bush-like body 100 on bolt B of a vehicle wheel.

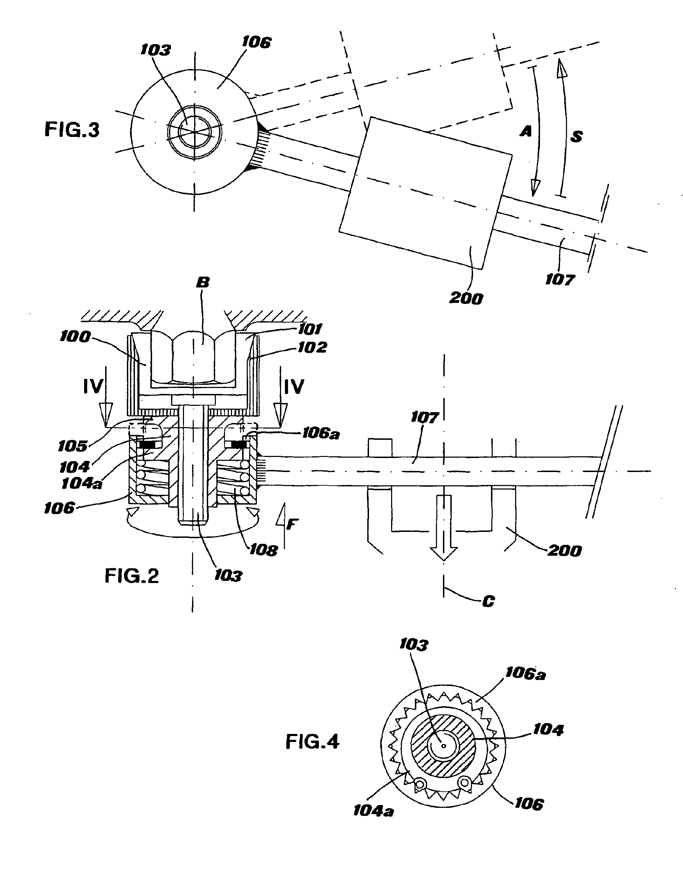

From bush-like body 100, furthermore, a threaded stem 103 extends, which runs through the bottom of socket 102 and protrudes by a sufficiently long portion (fig. 2).

On threaded stem 103 there is screwed a bell-shaped body 104 which rests, with its base flange 105, against the bottom plate of socket 102. The mutual screwing of bell-shaped body 104 on threaded stem 103 determines the axial shift between socket 102 and bush-like body 100 which achieves the desired tightening.

According to the embodiment of the invention shown in figs. 2 and 4, the flange 105 has a circular serrated perimeter or is provided with similar detents having a regular pitch. At the same time, on bell-shaped body 104 a cup 106 is applied - the entrance edge of which has a corresponding serrated profile 106a (fig. 4), apt to engage with the perimeter of flange 105 - integral with a rod 107 meant to support a U-shaped bracket 200 for attachment of the snow chain (according to what has been described above with reference to the known art).

The cup 106 is coaxially mounted to the bush-shaped body 104 and is free to rotate. The cup 106 is further partly free in an axial direction, so that it can slide along the axis of threaded stem 103 to be drawn closer to or further away from flange 105, in order to establish or release, respectively, the mutual engagement of the two serrated profiles.

When serrated profile 106a is in engagement with the serrated profile of flange 105, rotation engagement is established between cup 106 and bell-shaped body 104: in this condition it can therefore be acted on rod 107 to operate with a significant lever arm on bell-shaped body 104 and hence vigorously screw it on or off stem 103.

According to the embodiment shown, bell-shaped body 104 further has a second flange or crown 104a, having the same or a slightly smaller diameter than the inner diameter of the serrated profile 106a. Between this flange 104a and serrated profile 106a a seeger ring or equivalent is intended to be placed, which prevents the cup 106, with rod 107, from freely coming off bell-shaped body 104.

According to a preferred embodiment of the invention, it is advantageously desired for rod 107 to be also free to rotate in respect of the tightening system (bush 100 and socket 102), in order to be able to perform centring of the U-shaped bracket 200 on the rotation axis C of the wheel. For such purpose, disengagement means of cup 106 from bell-shaped body 104 are further provided. These means, as shown in fig. 2, are in the form of a spring 108 placed between crown 104a and the bottom plate of cup 106: this pre-loaded spring pushes cup 106 and keeps it away from serrated flange 105. Consequently, when the device on bolt B is intended to be tightened or loosened, it is sufficient to push in the direction indicated by arrow F, thereby overcoming the elastic reaction of spring 108 and bringing serrated profile 106a into engagement with the corresponding one of flange 105, then rotating rod 107 in one of the directions indicated by A (screwing on) and S (screwing off) in fig. 3.

As can be understood, thanks to the arrangement of the attachment assembly of the invention, the tightening member can also rely on centring rod 107, hence with the opportunity of having a suitable lever available and consequently to apply a tightening torque which is more than adequate for the purpose.

Advantageously, wherever also the opportunity of temporarily disengaging rod 107 from bell 104 is provided, it is possible to tighten the bush on the bolt also upon rotation over short arcs of a circle (for example 45°) and to then bring the rod backwards in the position most comfortable for tightening again (with a very convenient so-called pick-up movement).

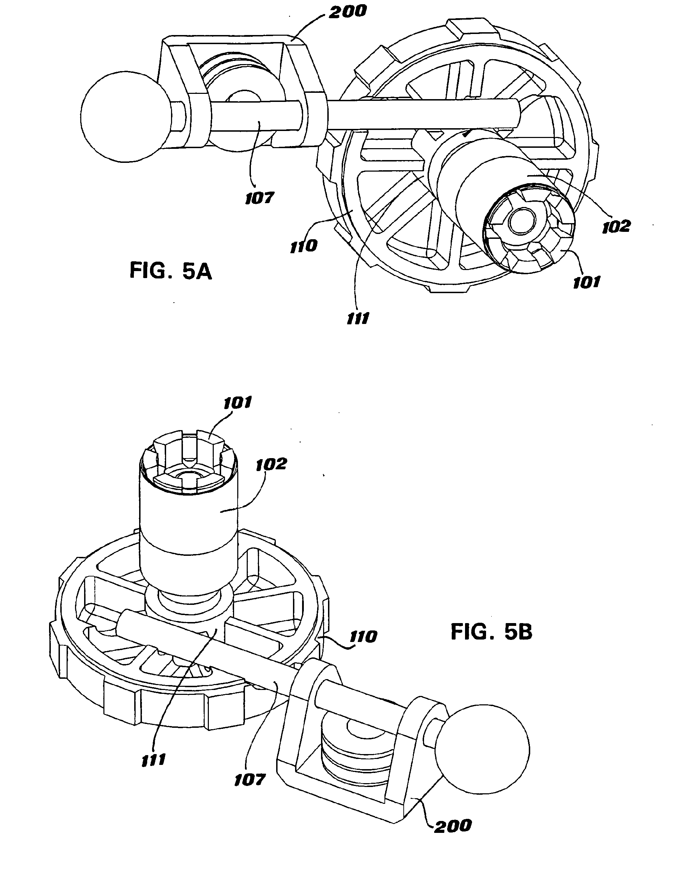

According to another embodiment, shown in figs. 5A and 5B, rod 107 is integral with a knob 110. In particular, rod 107 is tangentially welded to a central body 111 - equivalent to cup 106 of fig. 2 - arranged so that a moulded plastic knob 110 ca be joined thereto, for example by fitting with interference.

For this embodiment too, operation is equivalent to that shown earlier - both in the case of an arrangement with rod 107 always engaged therewith (i.e. integral in rotation with bell 104) and with rod 107 disengageable in rotation - with the advantage that it is possible to resort also to the knob, at least in the first part of quick screwing.

It is understood, however, that protection of the invention described above is not limited to the particular embodiments shown, but extends to any other equivalent construction variant according to the claims.

For example, coupling between cup 106 and the tightening bell-shaped body 104 can also be accomplished in alternative ways, without departing from the main teaching offered here. For example a fully similar mechanism to that of socket spanners may be adopted, with an inner body idle in one of the two rotation directions, possibly apt to be selected by the user to alternatively screw on or off.

Furthermore, disengagement in rotation between cup 106 and bell 104 may occur also in the opposite direction to the one shown.

## Claims

1. An assembly for attachment of a snow chain to a bolt (B) of a vehicle wheel, of the type comprising tightening-bush means and a centring rod (107) whereon an attachment element (200) is slidable, said bush means comprising a socket body (102) wherein a tightening bush (100) which may be coupled with said bolt (B) is slidable, the relative sliding between said bush (100) and said socket-shaped body (102) being accomplished by a nut/screw coupling between a first and a second tightening element (103, 104), **characterised in that** one of said tightening elements (104) is able to be coupled in rotation with said centring rod (107).

2. The assembly as in claim 1), wherein said rod (107) may be coupled with said first tightening element (104) by means of a cup (106) integral in rotation with said rod.

3. The assembly as in claim 2), wherein said cup (106) is axially slidable with respect to said first tightening element (104), a first end-of-stroke position determining the coupling in rotation therebetween.

4. The assembly as in claim 3), wherein a second end-of-stroke position is further provided, opposed to the first one, wherein said cup (106) is pushed by elastic means (108).

5. The assembly as in claim 3) or 4), wherein said rotation coupling occurs by front meshing of the respective inner (105) and outer (106a) shaped profiles.

6. The assembly as in claim 5), wherein said profiles are indent-shaped with evenly distributed peaks and valleys.

7. The assembly as in any one of claims 2) to 6), wherein said first tightening element is a bell-shaped body (104), equipped with a first base flange (105) resting on the bottom plate of said socket-shaped body (102), and said second tightening element is a threaded stem (103) integral with said bush (100).

8. The assembly as in claim 7), wherein said bell-shaped body (104) may be coupled in rotation with said cup (106) by means of said first flange (105).

9. The assembly as in claim 7) or 8), wherein said bell-shaped body (104) has a second flange or crown (104a) intended to represent a second end-of-stroke of the cup (106).

10. The assembly as in claim 9), wherein said cup (106) has an inner rim (106a) and a "seeger" ring is placed between said rim and said crown (104a).

11. The assembly as in claim 10), when depending on claim 5), wherein said rim (106a) makes up said inner shaped profile.

12. The assembly as in any one of the previous claims, wherein a central tightening knob (110) is further provided, which is integral in rotation with said rod (107).

13. Snow chain for vehicle wheels, **characterised in that** it comprises an attachment assembly as in any one of the preceding claims.

## Patentansprüche

1. Anordnung zum Befestigen einer Schneekette an einem Bolzen (B) eines Fahrzeugrades, der Bauart, die ein Anzugsbuchsenmittel und eine Zentrierstange (107) aufweist, wobei darauf ein Befestigungselement (200) verschieblich ist, wobei das Buchsenmittel einen Sockelkörper (102) umfaßt, in dem eine Anzugsbuchse (100), die mit dem genannten Bolzen (B) gekoppelt sein kann, verschieblich ist, wobei die relative Verschiebung zwischen der genannten Buchse (100) und dem genannten sockelförmigen Körper (102) durch eine Mutter/Schraubenkopplung zwischen einem ersten und einem zweiten Anzugselement (103, 104) erfolgt, **dadurch gekennzeichnet, daß** eines der genannten Anzugselemente (104) drehfest mit der genannten Zentrierstange (107) gekoppelt werden kann.

2. Anordnung nach Anspruch 1, **dadurch gekennzeichnet, daß** die genannte Stange (107) mit dem genannten ersten Anzugselement (104) mit Hilfe eines Bechers (106) gekoppelt werden kann, der drehfest mit der genannten Stange verbunden ist.

3. Anordnung nach Anspruch 2, **dadurch gekennzeichnet, daß** der genannte Becher (106) in axialer Richtung verschieblich in bezug auf das genannte erste Anzugselement (104) ist, wobei eine erste Position am Ende des Hubs die drehfeste Kopplung zwischen beiden festlegt.

4. Anordnung nach Anspruch 3, **dadurch gekennzeichnet, daß** weiter eine zweite Position am Ende eines Hubs vorgesehen ist, entgegengesetzt zu der ersten, in die der genannte Becher (106) durch ein elastisches Mittel (108) gedrückt wird.

5. Anordnung nach Anspruch 3 oder 4, **dadurch gekennzeichnet, daß** die genannte drehfeste Kopplung durch ein frontales Ineinandergreifen der jeweiligen inneren (105) und äußeren (106a) geformten Profile erfolgt.

6. Anordnung nach Anspruch 5, **dadurch gekennzeichnet, daß** die genannten Profile mit gleichmäßig verteilten Erhebungen und Vertiefungen einkerbungsartig geformt sind.

7. Anordnung nach einem der Ansprüche 2 bis 6, **dadurch gekennzeichnet, daß** das erste Anzugselement ein glockenförmiger Körper (104) ist, der mit einem ersten Basisflansch (105) ausgebildet ist, der auf der Bodenplatte des genannten sockelförmigen Körpers (102) aufliegt, und wobei das genannte zweite Anzugselement ein mit Gewinde versehener Schaft (103) ist, der einteilig mit der genannten Buchse (100) ist.

8. Anordnung nach Anspruch 7, **dadurch gekennzeichnet, daß** der genannte glockenförmige Körper (104) drehfest mit dem genannten Becher (106) mit Hilfe des genannten ersten Flanschs (105) gekoppelt werden kann.

9. Anordnung nach Anspruch 7 oder 8, **dadurch gekennzeichnet, daß** der genannte glockenförmige Körper (104) einen zweiten Flansch oder eine Krone (104a) aufweist, die dazu bestimmt ist, ein zweites Ende eines Hubs des Bechers (106) zu bilden.

10. Anordnung nach Anspruch 9, **dadurch gekennzeichnet, daß** der genannte Becher (106) einen inneren Rand (106a) aufweist, wobei ein "Seeger"-Ring zwischen dem genannten Rand und der genannten Krone (104a) angeordnet ist.

11. Anordnung nach Anspruch 10, soweit rückbezogen auf Anspruch 5, **dadurch gekennzeichnet, daß** der genannte Rand (106a) das genannte innere geformte Profil bildet.

12. Anordnung nach einem der vorangehenden Ansprüche, **dadurch gekennzeichnet, daß** weiterhin ein zentraler Anzugsknopf (110) vorgesehen ist, der drehfest mit der genannten Stange (107) ausgebildet ist.

13. Schneekette für Fahrzeugräder, **dadurch gekennzeichnet, daß** sie eine Befestigungsanordnung nach einem der vorangehenden Ansprüche aufweist.

## Revendications

1. Ensemble pour assujettir une chaîne à neige à une vis (B) d'une roue de véhicule, du type comprenant un moyen formant douille de serrage et une barre (107) de centrage sur laquelle un élément (200) d'assujettissement peut coulisser, ledit moyen formant douille comprenant un corps (102) de tubulure, dans lequel une douille (100) de serrage, qui peut être couplée avec ladite vis (B), peut coulisser, le coulissement relatif entre ladite douille (100) et ledit corps (102) en forme de tubulure étant assuré par un couplage écrou/vis entre un premier et un second élément (103, 104) de serrage, **caractérisé en ce que** l'un (104) desdits éléments de serrage peut être couplé en rotation avec ladite barre (107) de centrage.

2. Ensemble selon la revendication 1, dans lequel ladite barre (107) peut être couplée avec ledit premier élément (104) de serrage au moyen d'une coupelle (106) solidaire en rotation avec ladite barre.

3. Ensemble selon la revendication 2, dans lequel ladite coupelle (106) peut coulisser axialement par rapport audit premier élément (104) de serrage, une première position de fin de course déterminant le couplage de rotation entre eux.

4. Ensemble selon la revendication 3, dans lequel une seconde position de fin de course est en outre prévue, opposée à la première, dans laquelle ladite coupelle (106) est poussée par un moyen élastique (108).

5. Ensemble selon la revendication 3 ou 4, dans lequel ledit couplage de rotation se fait par prise frontale des profils façonnés intérieur (105) et extérieur (106a) respectifs.

6. Ensemble selon la revendication 5, dans lequel lesdits profils ont des formes de dents et sont dotés de crêtes et de vallées régulièrement réparties.

7. Ensemble selon l'une quelconque des revendications 2 à 6, dans lequel ledit premier élément de serrage est un corps en forme de cloche (104) équipé d'une première collerette de base (105) reposant sur la plaque inférieure dudit corps en forme de tubulure (102), et ledit second élément de serrage est une tige filetée (103) réalisée d'un seul tenant avec ladite douille (100).

8. Ensemble selon la revendication 7, dans lequel ledit corps en forme de cloche (104) peut être couplé en rotation avec ladite coupelle (106) au moyen de ladite première collerette (105).

9. Ensemble selon la revendication 7 ou 8, dans lequel ledit corps en forme de cloche (104) comporte une seconde collerette, ou couronne, (104a) ayant pour rôle d'assurer une seconde fin de course de la coupelle (106).

10. Ensemble selon la revendication 9, dans lequel ladite coupelle (106) comporte un rebord intérieur (106a) et un anneau de retenue de type « seeger » est placé entre ledit rebord et ladite couronne (104a).

11. Ensemble selon la revendication 10, lorsqu'elle dépend de la revendication 5, dans lequel ledit rebord (106a) constitue ledit profil intérieur façonné.

12. Ensemble selon l'une quelconque des revendications précédentes, dans lequel un bouton central (110) de serrage est en outre prévu, lequel tourne d'un seul tenant avec ladite barre (107).

13. Chaîne à neige pour des roues de véhicule, **caractérisée en ce qu'**elle comprend un ensemble d'assujettissement selon l'une quelconque des revendications précédentes.
